# EUROPEAN PATENT APPLICATION

(11) **EP 4 115 847 A1**
(43) Date of publication of application: **11.01.2023**
(21) Application number: 21764454.1
(22) Date of filing: 03.03.2021
(51) Int. Cl.: A61C 8/00

(54) **DENTAL IMPLANT**

(30) Priority: 05.03.2020 BR 102020004468
(71) Applicant: Implacil de Bortoli Material Odontológico, 01521-020 São Paulo (BR)
(72) Inventor: MAGNANI FORTUNATO, José Ricardo, 02372-080 São Paulo (BR)
(74) Representative: Lavoix
(86) International application number: PCT/BR2021/050092
(87) International publication number: WO 2021/174325

(57) **Abstract**

The present invention relates to the field of dental implants, and more specifically to optimization of the macrogeometry of the implant to improve osseointegration. To achieve this improvement, the dental implant (1) contains cylindrical recesses (2) extending from the tip of the thread (6) towards the body of the implant (4), enabling improved blood irrigation, less insertion torque without losing primary stability, and creating osseointegration chambers.

## Description

### FIELD OF THE INVENTION

The present invention relates to the development of dental/odontological implants, and more specifically to optimization of the macrogeometry of the implant to improve osseointegration.

### BACKGROUND OF THE INVENTION

Dental implants are elements generally made of titanium, to be integrated into the bone tissue and, a prosthesis is placed thereon to substitute the teeth that were lost. This integration is the growth of the bone tissue on the implant, also called osseointegration.

Osseointegration can be observed in laboratory studies where the implants are inserted into animal bones and after the inflammation period (generally 15 days), a measurement is taken of the torques (in Nem.) required to remove them in different periods. The greater the removal torque, the better the integration of the dental implant.

Various factors have to be taken into account for the success of the dental implant. Firstly, the conditions of the patient, such as, for example: bone density, whether he or she is diabetic and whether the patient is or used to be a smoker. Other factors to be considered relate to the construction of the implant, such as the quality of the product, the surface treatment and the macrogeometry of the implant. Then, in search of success in fastening the implant, various solutions have been devised.

The ratio between the diameter of the drill and the diameter of the implant should be such that the torque for placement is not very high (today, an average placement torque is envisioned to be about 45N). High torques may cause necrosis of the bone tissue, owing to the lack of space for blood irrigation, thus taking more time for recovery after surgery. Very low placement torques decrease the primary stability of the implant, whereby hampering the precocious load or even the immediate load.

Implants of the state of the art are mostly cylindrical or conical bodies wrapped by a thread. However, with a view to solving the aforementioned problems, the state of the art has sought new geometric solutions.

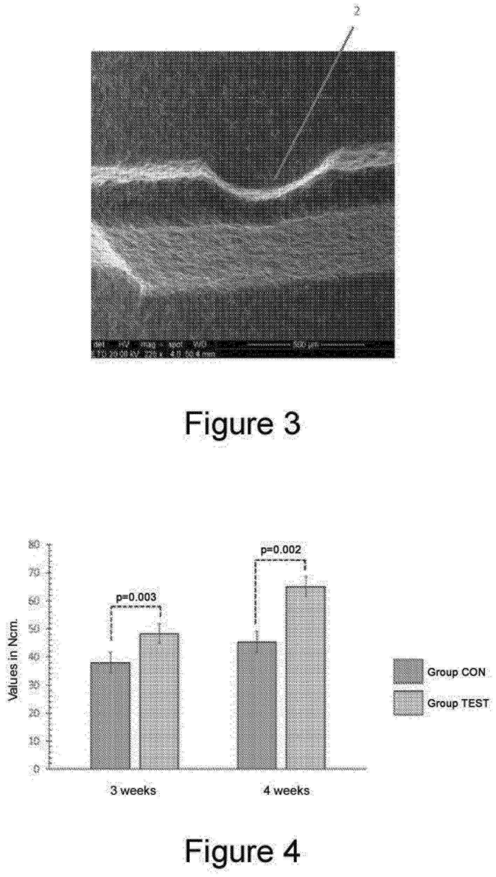

In an attempt to solve the problems of the state of the art, letter patent **PI** 0317837-4 describes an implant with peripheral grooves through its length, in order to increase the surface of the thread flanks and help in the fusion process (term used in the document) or retention of the implant in the bone. In an additional arrangement, the document further proposes the addition of bone growth stimulators in the grooves presented. However, the solution presented in this patent is not the optimal solution, the removal torque being achieved after 6 weeks of implant (collected in studies with rabbits), less than that found after 4 weeks with the one of the present invention (Figure 4).

Letter patent BR 102014031426-1 presents spherical cutting cavities on the tops of the rims of the central region thread with greater to decrease both the amount of bone withdrawn and the damage to the blood vessels in the region near the implant. Despite being details in the thread of the implant, they are altogether different and achieve different results if compared to the present invention.

Another solution presented in the state of the art is the one set out in document CN 208371937, which shows a hollow dental implant, presenting holes, extending into the hollow part of the implant, between the rims of the thread. This solution is to enable the alveolar bone to penetrate the implant and decrease the risk of bacterial infections. Just as in BR 102014031426-1, the results achieved are not the same and the macrogeometry is entirely different, and in the Chinese document, the holes are located in the body of the implant and not cylindrical recesses (2) in the flanks of the thread.

The present invention considerably decreases the recovery time of the implant patient. In this sense, the invention was designed to improve the underlying factors for the success of the implant.

The cylindrical recesses (2) reduce the insertion torque without altering the ratio between the diameters of the drill (7) and of the implant (1), not adversely affecting the primary stability.

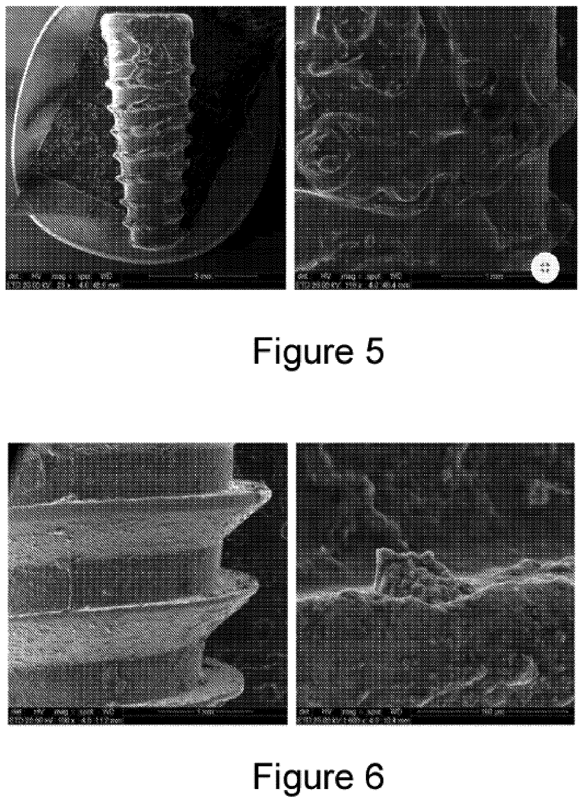

Furthermore, the free spaces left between the diameter of the drill and the areas where the cylindrical recesses (2) are found improve the blood circulation and create osseointegration chambers where further formations of new bone tissues are noted (Figure 5).

The graph of figure 4 and the images of figures 5 and 6 show results of studies with implants in rabbit bones to see the improvements achieved by the invention (TEST Group) when compared to an implant without optimized macrogeometry (GROUP CON). The graph and the figures clearly show the increase of the removal torque and the formation of new bone tissue on the surface of the implant.

### BRIEF DESCRIPTION OF THE DRAWINGS

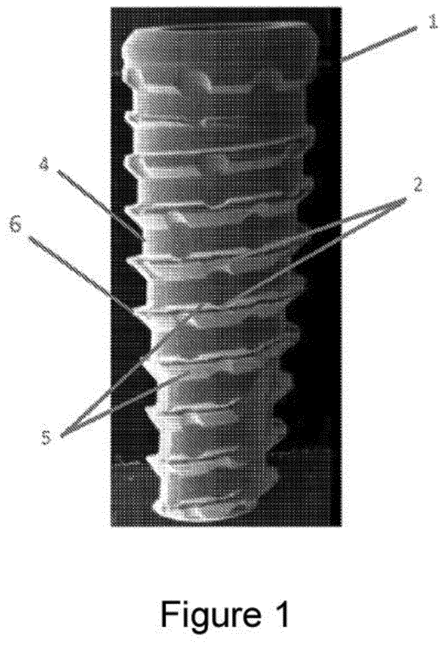

**Figure 1** represents a view of the implant with optimized macrogeometry (1).

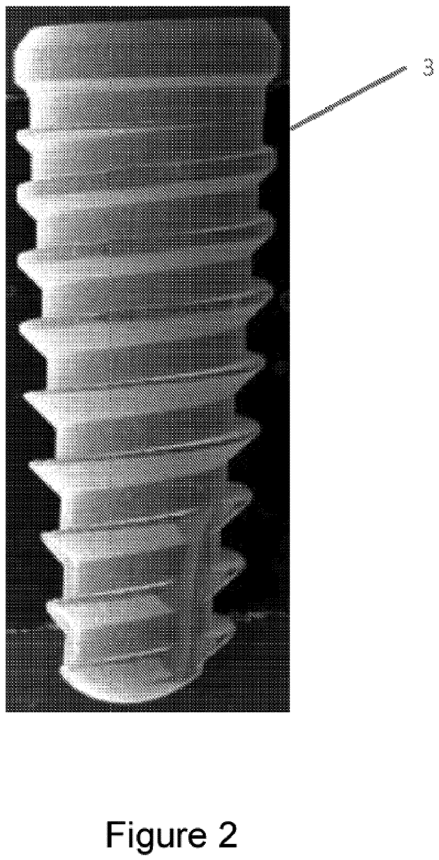

**Figure 2** represents a common implant (3).
**Figure 3** represents a view highlighting detail of the optimized macrogeometry.
**Figure 4** represents the graph of the removal torque for the implant with optimized macrogeometry and for the common implant.
**Figure 5** represents the formation of new bone tissue on the surface of the implant with optimized macrogeometry after 4 weeks.
**Figure 6** represents the formation of new bone tissue on the surface of the common implant after 4 weeks.

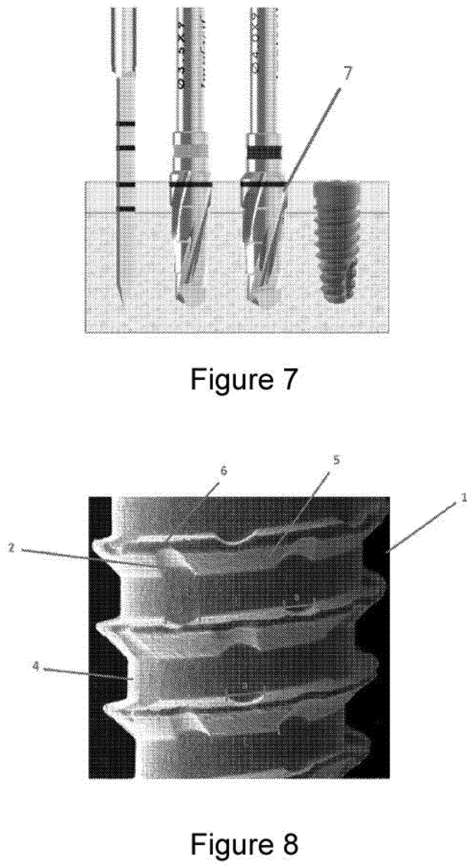

**Figure 7** represents the placement method of an implant.
**Figure 8** shows the ratio between the width of the recesses and the distance therebetween.

### DETAILED DESCRIPTION OF THE INVENTION

Dental implant (1), preferably made of titanium, which may be cylindrical or conical, comprising a thread and characterized by presenting cylindrical recesses (2) starting from the tip of the thread (6), passing through the upper and/or lower flank (5) towards the body of the implant (4).

The number of cylindrical recesses (2) may vary according to the distance (L) between the consecutive recesses (2) and the width (a) of the recesses. For the implant to present improvements over the state of the art, the distance (L) must be less than 4 (four) times the width of the recess (a). For distances (L) greater than 4 times the width of the recess (a), the improvements achieved in the integration of the implant with the bone are reduced.

The arrangement of the implant submitted for study is made of titanium, having a diameter of 4 mm at its upper part, 3 mm at its lower part, a thread pitch of 1 mm, radius of the recesses (2) measuring 0.35 mm, a length of 10 mm and having 6 recesses for each turn of the thread.

The sizes of the implant may vary, and may be 3.5 mm to 6 mm in diameter at its upper part, 2. 5 mm to 4 mm in diameter at its lower part, a thread pitch of 0.75 mm to 1.25 mm, radius of the recesses (2) not exceeding 1 mm, a length of 5mm to 20 mm and amount of recesses for each turn of the thread in accordance with the criterion cited previously.

In its upper region, the implant (1) comprises the most varied types of encasement of the prosthesis elements present in the state of the art, including: internal hexagon, external hexagon and Morse taper.

## Claims

1. A dental implant (1) having a cylindrical or conical body, comprising a thread and **characterized by** presenting cylindrical recesses (2) starting from the tip of the thread (6), passing through its flank (5) towards the body of the implant (4).

2. The dental implant (1), according to claim 1, **characterized in that** the recesses are located on the upper and/or lower flanks of the thread (5).

3. The dental implant (1), according to claims 1 and 2, **characterized in that** the distance (L) between the consecutive recesses is less than 4 times the width of the recess (a).

## Amended claims

### Amended claims under Art. 19.1 PCT

1. Dental implant (1) having a cylindrical or conical body, comprising a thread and **characterized by** presenting cylindrical recesses (2) starting from the tip of the thread (6), passing through its flank (5) towards the body of the implant (4), with the recesses (2) being located on the upper and/or lower flanks of the thread (5) and having distance (L) between the consecutive recesses less than 4 times the width of the recess (a).
